# EUROPÄISCHE PATENTSCHRIFT

(11) **EP 3 400 154 B1**
(45) Veröffentlichungstag und Bekanntmachung des Hinweises auf die Patenterteilung: **26.02.2020**
(21) Anmeldenummer: 16816695.7
(22) Anmeldetag: 21.12.2016
(51) Int. Cl.: B60T 17/00

(54) **GERÄUSCHDÄMPFER FÜR EIN DRUCKLUFTSYSTEM EINES FAHRZEUGS, INSBESONDERE NUTZFAHRZEUGS**
SILENCER FOR PRESSURIZED AIR SYSTEM OF A VEHICLE, IN PARTICULAR UTILITY VEHICLE.
SILENCIEUX POUR UN SYSTÈME D'AIR PRESSURISÉE D'UN VÉHICULE ET EN PARTICULIER D'UN VÉHICULE UTILITAIRE

(30) Priorität: 05.01.2016 DE 102016100139
(43) Veröffentlichungstag der Anmeldung: 14.11.2018
(73) Patentinhaber: KNORR-BREMSE Systeme für Nutzfahrzeuge GmbH, 80809 München (DE)
(72) Erfinder: AYDEMIR, Isa, 81249 München (DE); LEINUNG, Andreas, 81245 München (DE)
(86) Internationale Anmeldenummer: PCT/EP2016/082176
(87) Internationale Veröffentlichungsnummer: WO 2017/118576

(56) Entgegenhaltungen:
- EP-A1- 2 610 124
- EP-A2- 0 359 948
- DD-A1- 240 966
- DE-A1- 3 311 682
- GB-A- 1 155 285

## Beschreibung

Die vorliegende Erfindung betrifft einen Geräuschdämpfer für ein Druckluftsystem eines Fahrzeugs, insbesondere eines Nutzfahrzeugs.

Bei Geräuschdämpfern bzw. Schalldämpfern, insbesondere im Nutzfahrzeugbereich und in der Luftaufbereitung, besteht die Möglichkeit, dass sich bei wiederholtem Entlüften feuchte Luft der Schalldämpfer unterhalb des Gefrierpunkts mit einfrierendem Wasserdampf zusetzt und teilweise oder sogar vollständig blockiert. Dadurch entsteht im Schalldämpfer ein hoher Staudruck bzw. vor dem Schalldämpfer ein hoher Staudruck mit dem Risiko, dass aufgrund des entstehenden hohen inneren Drucks der Schalldämpfer von der aufgestauten Luft abgerissen wird. Das Gefährdungspotential eines abschießenden Schalldämpfers ist für nachfolgende Verkehrsteilnehmer nicht unerheblich und muss deshalb durch entsprechende Maßnahmen vermieden werden.

Entsprechende Schalldämpfer sind bereits aus der WO 10 2009 052 884 A1, der EP 0 565 136 A2 sowie der EP 0 596220 B1 und EP 2 610 124 A1 bekannt.

Die WO 2009/152884 A2 zeigt einen Geräuschdämpfer für Druckluftsysteme von Nutzfahrzeugen.

Die DE 19 701 361 C1 betrifft einen Geräuschdämpfer für Ventilanordnungen in Druckluftanlangen für Nutzfahrzeuge, wobei ein Bypasskanal und ein Nebenauslass vorgesehen sind, über die Luft entweichen kann, wenn sich das Schallschluckmaterial zusetzt und eine Verstopfung gegeben ist.

Die WO 2013/026736 betrifft eine Schalldämpfungseinrichtung für eine Lufttrocknungsanlage eines Druckluftversorgungssystems für ein Nutzfahrzeug, wobei ein Heizstab im Inneren der Schalldämpfungseinrichtung vorgesehen ist, um ein Zufrieren und Verstopfen durch gefrorenes Kondensat zu verhindern.

Wünschenswert ist weiter, dass die Instandhaltungskosten für den Ersatz von Serienschalldämpfern durch Verhinderung des Zusetzens des Schalldämpfers, insbesondere durch Zufrieren des Kondensats, minimiert werden können.

Es gibt weiter in Serie befindliche Konzepte zur Überdruck-Kompensierung, die auf einer Berstscheibe basieren, die bei Überdruck eine Sollbruchstelle darstellt. Als nachteilig erweist sich hierbei, dass die Funktion bei einer Überdrucksituation nicht mehr gegeben ist.

Es ist daher die Aufgabe der vorliegenden Erfindung, einen Geräuschdämpfer für ein Druckluftsystem eines Fahrzeugs, insbesondere eines Nutzfahrzeugs, der eingangs genannten Art in vorteilhafter Weise weiterzubilden, insbesondere dahingehend, dass im Falle einer Überdrucksituation dieser sicher abgebaut werden kann und die Überdruck-Kompensierung nicht dazu führt, dass danach der Geräuschdämpfer bzw. Schalldämpfer ausgetauscht werden muss.

Diese Aufgabe wird erfindungsgemäß gelöst durch einen Geräuschdämpfer mit den Merkmalen des Anspruchs 1. Danach ist vorgesehen, dass ein Geräuschdämpfer für ein Druckluftsystem eines Fahrzeugs, insbesondere eines Nutzfahrzeugs, bereitgestellt wird, wobei der Geräuschdämpfer ein Gehäuse, wenigstens einen Lufteinlass und wenigstens einen Luftauslass, wenigstens ein im Gehäuse angeordnetes Dämmmittel und wenigstens eine Überdruckventileinheit aufweist.

Die Erfindung basiert auf dem Grundgedanken, einen hohen Staudruck im Geräuschdämpfer dadurch zu verhindern, dass dieser ggf. über die Überdruckventileinheit abgebaut werden kann. So soll ein hoher Staudruck verhindert werden, der sich ggf. nach längerer Betriebszeit des Dämmmittels einstellen kann oder ggf. bei einem Betrieb unterhalb des Gefrierpunkts bei wiederholtem Entlüften feuchter Luft, wobei es zu einem Einfrieren von Wasserdampf beispielsweise in das Dämmmittel kommen kann und deshalb der Schalldämpfer blockiert, entstehender Überdruck abgebaut werden kann. Der Geräuschdämpfer weist somit ein Gehäuse und Dämmmittel auf, sowie weiter einen Lufteinlass und einen Luftauslass und das Dämmmittel selbst ist innerhalb des Gehäuses angeordnet. Die Geräuschdämpfung wird dadurch erzielt, dass die Luft vom Lufteinlass durch das Dämmmittel zum Luftauslass das Gehäuse und damit den Geräuschdämpfer durchströmt. Die Geräuschdämpfer sind insbesondere dazu vorgesehen, Geräusche in Druckluftsystemen, die beim Entlüften entstehen, zu reduzieren.

Die Uberdruckventileinheit ist eine zerstörungsfrei arbeitende Überdruckventileinheit.

Mit anderen Worten ausgedrückt ist die Überdruckventileinheit eine reversibel arbeitende bzw. reversibel in eine Öffnungsstellung (insbesondere zur Ableitung von Überdruck) und eine Schließstellung überführbare Überdruckventileinheit.

Bei den heutigen Geräuschdämpfern besteht die Gefahr sogenannter Toträume. Diese Toträume im Dämmmittel werden durch die Luft nicht durchströmt. Dadurch ist der Wirkungsgrad der Geräuschdämpfung ggf. nicht effektiv. Bei einer Druckluft-Entlüftungseinrichtung ist es jedenfalls im Moment nicht auszuschließen, dass nach längerer Betriebszeit die Druckluft-Durchlässigkeit der geräuschdämpfenden Mittel im Gehäuseinneren, wie z.B. Gewirk o.ä., der Einrichtung nachlässt, z.B. durch gefrierendes Kondensat oder Ölkohleablagerungen. Dieser hohe Staudruck im Inneren des Geräuschdämpfers kann zu einer Überdrucksituation führen. Die Überdruckventileinheit ist derart angeordnet, dass eine Überdrucksituation in Folge eines höheren Staudrucks im Inneren des Geräuschdämpfers abgebaut werden kann, ohne dass es zu einer ireversiblen Veränderung des Überdruckventils kommt.

Insbesondere kann vorgesehen sein, dass die Überdruckventileinheit ein Überdruckventil mit einer federbelasteten Kugel aufweist. Dadurch wird es besonders vorteilhaft möglich, über das Überdruckventil reversibel einen zu hohen Druck im Geräuschdämpfer ablassen zu können. Mittels einer federbelasteten Kugel ist eine reversible Ventilbewegung möglich, die erst dann durch entsprechende Wahl der Feder, mittels derer die Kugel belastet wird, ausgelöst wird.

Die Überdruckventileinheit kann einen Nutring aufweisen. Dieser Nutring kann in Folge des Staudrucks sich elastisch derart abheben, dass ein Staudruck abgebaut werden kann. Nach Abbau des Überdrucks kann sodann der Nutring sich erneut dichtend derart anlegen, dass auch hier eine reversible Ventilbewegung ermöglicht wird und entsprechend nach dem Überdruckabbau eine Abdichtung der Überdruckventileinheit gegenüber der Atmosphäre realisiert wird.

Des Weiteren kann vorgesehen sein, dass die Überdruckventileinheit einen Gummizylinder und wenigstens einen Druckablassstutzen mit wenigstens einer Druckablassöffnung aufweist, wobei der Gummizylinder die Druckablassöffnung überdeckt. Hierdurch kann ebenfalls eine einfach herzustellende Überdruckventilfunktion realisiert werden, die ebenfalls eine reversible zerstörungsfreie Entlüftung bei einer Überdrucksituation in Folge zu hohen Staudrucks ermöglicht.

Insbesondere kann in diesem Zusammenhang vorgesehen sein, dass der Gummizylinder derart beschaffen und angeordnet ist, dass diese bei Überdruck keine Neigung zu einer Wanderbewegung zeigt, d.h. bei Überdruck z.B. mit der Zeit wegwandert oder gar sich löst und abfällt.

Des Weiteren ist es möglich, einen definierten Öffnungsdruck vorzugeben, wobei in diesem Zusammenhang die Orientierung der Abströmung des durch die Überdruckventileinheit abströmenden Überdrucks vorgegeben wird. Dies kann beispielsweise dadurch erfolgen, eine Abströmseite und auch entsprechende Länge durch die Gestaltung des Gummizylinders vorgegebenen wird, die dann das Abströmverhalten vordefiniert beeinflusst. Dies kann bespielsweise durch einen Durchmesser-Unterschied über die Länge des Gummizylinders oder durch Arretierungsnasen (z.B. zur Verhinderung einer Wanderbewegung und Vorgabe der Abströmung) beeinflusst bzw. vorgegeben werden. Durch diese Gestaltung wird an diesen Stellen die Pressung des Gummizylinders bzw. Gummischlauchs erhöht und der Überdruck bzw. die unter Überdruck stehende Luft gezwungen, bei Überdruck in eine andere, nämlich die vorgegebene Abströmrichtung abzufließen.

Des Weiteren ist möglich, dass die Überdruckventileinheit mit wenigstens einer gesonderten Überdruckauslassöffnung in Verbindung steht.

Über die Überdruckauslassöffnung kann bei entsprechendem Auslösen der Überdruckventileinheit der Überdruck an die Atmosphäre abgegeben werden. Die Überdruckauslassöffnung kann beispielsweise im Gehäuse angeordnet sein.

Die Überdruckauslassöffnung kann gegenüberliegend dem Lufteinlass angeordnet sein. Dies ermöglicht eine unmittelbare Abfuhr des Überdrucks über die Überdruckluftauslassöffnung im Falle eines zu hohen Staudrucks und eines entstehenden Überdrucks im Gehäuse des Geräuschdämpfers. Insbesondere ist eine derartige Ausführungsform bei einer Ausführung eines Geräuschdämpfers, der kein oder wenig Dämmmaterial im Inneren des Geräuschdämpfers aufweist.

Grundsätzlich ist auch denkbar, dass ein Geräuschdämpfer derart ausgeführt ist, dass mittig in seinem Inneren Dämmmaterial angeordnet ist, und dass die Überdruckventileinheit ebenso wie der Lufteinlass stromaufwärts des Dämmmaterials angeordnet ist und/oder dass Überdruckventileinheit und der Lufteinlass benachbart zueinander angeordnet sind.

Die Überdruckauslassöffnung und der Lufteinlass können an einen Verbindungskanal angeschlossen sein. Dadurch wird eine direkte Verbindung zwischen Lufteinlass und Überdruckluftauslassöffnung bereitgestellt, die im Falle des Überdruckabbaus und beim Auslösen der Überdruckventileinheit von Vorteil ist.

Der Verbindungskanal kann im Inneren des Gehäuses angeordnet sein. Dadurch kann ein kompakter Aufbau des Geräuschdämpfers gewährleistet werden.

Der Lufteinlass kann an dem einen Ende des Verbindungskanals und die Überdruckluftauslassöffnung am entgegengesetzten anderen Ende des Verbindungskanals angeordnet sein.

Des Weiteren kann vorgesehen sein, dass der Verbindungskanal eine oder mehrere Öffnungen aufweist, die den Verbindungskanal mit dem Geräusch des Gehäuseinneren verbinden, in dem das Dämmmaterial angeordnet ist. Insbesondere ist es möglich, dass aus dem Verbindungskanal eine radiale Abströmung der über den Lufteinlass eintretenden Druckluft in das Dämmmaterial erfolgt. Folglich wird hierdurch eine axiale Luftzufuhr und eine radiale Luftabfuhr aus dem Geräuschdämpfer ermöglicht. Im Falle eines Überdrucks kommt es dann zu einer direkten Durchleitung der Druckluft in axialer Richtung über den Lufteinlass durch den Verbindungskanal hin zur Überdruckluftauslassöffnung.

Insbesondere kann vorgesehen sein, dass die Überdruckventileinheit bezogen auf die Strömungsrichtung des durch den Verbindungskanal strömenden Fluidstrom aufwärts der Überdruckluftauslassöffnung angeordnet ist. Dadurch wird erreicht, dass die Überdruckluftventileinheit im Inneren des Gehäuses angeordnet werden kann, wodurch diese beispielsweise gegenüber mechanischen Einflüssen geschützt ist.

Weitere Einzelheiten und Vorteile der Erfindung sollen nun anhand eines in den Zeichnungen dargestellten Ausführungsbeispiels näher erläutert werden.

Es zeigen:
- Fig. 1: eine schematische Schnittdarstellung eines erfindungsgemäßen Ausführungsbeispiels eines Geräuschdämpfers für ein Druckluftsystem für ein Fahrzeug;
- Fig. 2: eine weitere Ausführungsform eines erfindungsgemäßen Ausführungsbeispiels eines Geräuschdämpfers für ein Druckluftsystem für ein Fahrzeug;
- Fig. 3: eine mögliche Ausgestaltung einer Überdruckventileinheit für einen erfindungsgemäßen Geräuschdämpfer;
- Fig. 4: eine Detaildarstellung der Überdruckventileinheit für den Geräuschdämpfer gemäß Fig. 1;
- Fig. 5: eine Detaildarstellung der Überdruckventileinheit für den Geräuschdämpfer gemäß Fig. 2;
- Fig. 6: eine Detaildarstellung einer weiteren möglichen Ausführungsform einer Überdruckventileinheit;
- Fig. 7: eine Detaildarstellung einer weiteren möglichen Ausführungsform einer Überdruckventileinheit;
- Fig. 8: eine Detaildarstellung aus der Überdruckventileinheit gemäß Fig. 7;
- Fig. 9: eine weitere Ausführungsform der Überdruckventileinheit, angelehnt und abgewandelt ausgehend von der Ausführungsform gemäß Fig. 7;
- Fig. 10: eine perspektivische Ansicht auf eine erste Ausführung einer Schlauchschelle zur Befestigung des Gummizylinders gemäß Ausführungsform nach Fig. 6 und 7;
- Fig. 11: eine perspektivische Ansicht auf eine weitere Ausführung einer Schlauchschelle zur Befestigung des Gummizylinders gemäß Ausführungsform nach Fig. 6 und 7; und
- Fig. 12: eine perspektivische Ansicht auf eine weitere Ausführung einer Schlauchschelle zur Befestigung des Gummizylinders gemäß Ausführungsform nach Fig. 6 und 7.

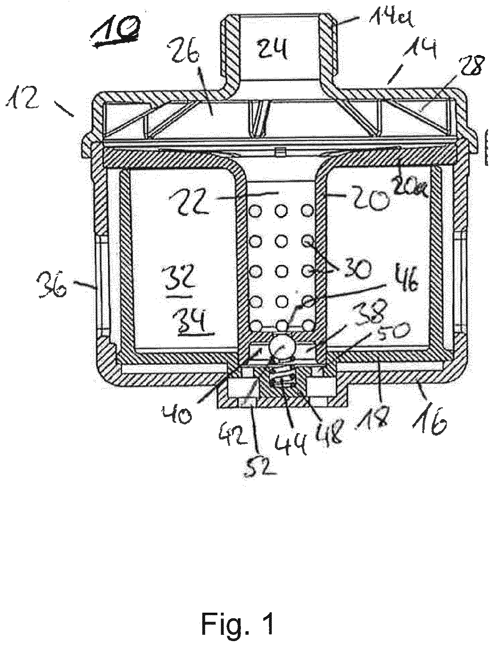

**Fig. 1** zeigt in einer schematischen Schnittdarstellung eine erste Ausführungsform eines erfindungsgemäßen Geräuschdämpfers 10 für ein nicht näher dargestelltes Druckluftsystem eines Fahrzeugs, hier eines Nutzfahrzeugs. Der Geräuschdämpfer 10 kann insbesondere im Zusammenhang mit der Luftaufbereitung der pneumatischen Bremsanlage des Nutzfahrzeugs eingesetzt werden.

Der Geräuschdämpfer 10 weist ein mehrteiliges Gehäuse 12 auf. Das Gehäuse 12 weist dabei einen Gehäusedeckel 14, einen topfartigen Hauptgehäusekörper 16, ein Innengehäuse 18 sowie einen Gehäuseeinsatz 20 mit einem Verbindungskanal 22 auf.

Am Gehäusedeckel 14 ist ein Ansatz 14a vorgesehen, in dem der Lufteinlass 24 angeordnet ist.

Der Lufteinlass 24 weitet sich sodann auf und schließt an eine Einlasskammer 26 an, in der mehrere Verteilerrippen 28 vorgesehen sind.

Der Gehäuseeinsatz 20 weist einen Kragen 20a auf, der gemeinsam mit dem Gehäusedeckel 14 die Einlasskammer 26 umgrenzt und der in seinem mittleren Bereich eine Öffnung aufweist, die zum Verbindungskanal 22 führt.

Der Verbindungskanal 22 weist eine Vielzahl von radialen Öffnungen 30 auf, die zu einem Ringraum 32 führen, in dem Dämmmaterial 34 angeordnet ist.

Im Gehäusetopf 16 ist radial außenliegend umlaufend eine Vielzahl von Luftauslässen 36 vorgesehen. Der Gehäusetopf 16 und der Gehäusedeckel 14 bilden die außenliegenden Bestandteile des Gehäuses 12, wohingegen der Gehäuseeinsatz 20 und der innere Gehäusetopf 18 innenliegend im Gehäuse 12 angeordnet sind.

Der Geräuschdämpfer 10 weist weiter eine Überdruckventileinheit 38 auf.

Die Überdruckventileinheit 38 ist hier als axial ausgerichtete Überdruckeinheit 38 mit reversibler Betätigung ausgeführt.

Die axiale Ausrichtung bezieht sich auf die Längsachse des Geräuschdämpfers 10.

Die Überdruckventileinheit 38 ist dabei koaxial mit dem Lufteinlass 24 und am dem Lufteinsatz 24 entgegengesetzten Ende des Verbindungskanals 22 angeordnet.

Die Überdruckventileinheit 38 weist hier ein Überdruckventil 40 mit einer federbelasteten Kugel 42 auf. Die Kugel 42 wird dabei mittels einer Feder, hier einer Schraubfeder 44, federbelastet gegen eine Ventilöffnung 46 angestellt.

Die Feder 44 ist in einer Federaufnahme 48, d.h. einer zylinderförmigen Ausnehmung im Gehäusetopf 18, geführt.

Die Feder 44 ist weiter auf der Seite der Kugel 42 angeordnet, die dem Lufteinlass 24 und der Ventilöffnung 46 entgegengesetzt ist.

Die Überdruckventileinheit 38 weist im Gehäusetopf 18 Luftauslassöffnungen 50 und Überdruckluftauslassöffnungen 52 im Gehäusetopf 16 auf.

Die Überdruckventileinheit 38 ist somit bezogen auf die Strömungsrichtung des durch den Verbindungskanal 22 strömenden Fluids, insbesondere in einem Überdruckfall, stromaufwärts der Überdruckluftauslassöffnung 52 angeordnet.

Die Funktion des Geräuschdämpfers 10 lässt sich wie folgt beschreiben :
Im normalen Betrieb strömt Druckluft über den Lufteinlass 24 axial in den Geräuschdämpfer 10 ein, wird sodann über die Einlasskammer 26 in den Verbindungskanal 22 geführt. Aus dem Verbindungskanal 22 strömt die eingeführte Druckluft über die radialen Öffnungen 30 in den Ringraum 32 radial ab und wird duch das dort befindliche Dämmmaterial 34 geführt, um dann den Geräuschdämpfer 10 über die radial außenliegenden Luftauslässe 36 zu verlassen.

Es erfolgt also im Normalbetrieb eine radiale Einströmung von Druckluft und eine radiale Abströmung über die Luftauslässe 36.

In einem Fall, in dem sich der Geräuschdämpfer 10 zusetzt, beispielsweise durch Einfrieren des Kondensats im Ringraum 32 und dem Dämmmaterial 34 oder durch Ablagerungen beispielsweise von Ölkohlerückständen, entsteht ein höherer Staudruck im Geräuschdämpfer 10, insbesondere im Zwischenkanal 22.

Sobald dieser Druck größer ist als die Federkraft der Feder 44, wird die Kugel 42 zurückgedrückt und über die Ventilöffnung 46 ein Zugang zu der Überdruckluftauslassöffnung 52 freigegeben. Hierdurch kann ein reversibler Überdruckluftausgleich erfolgen.

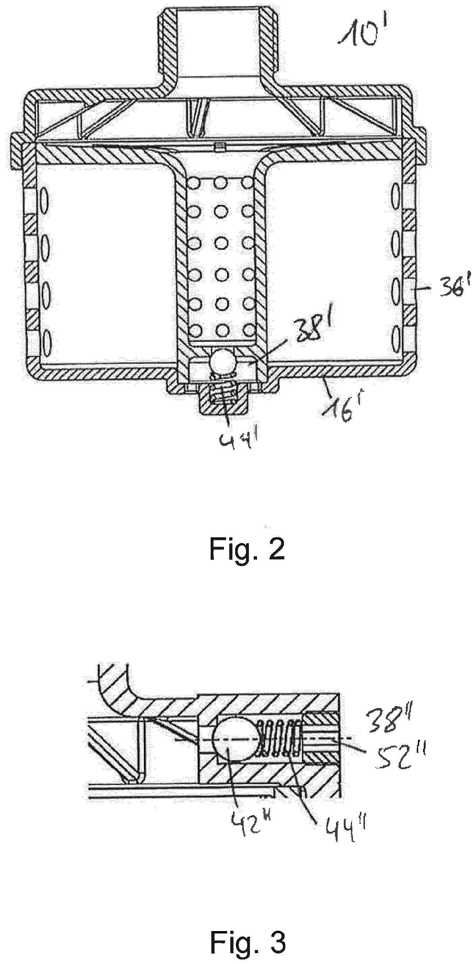

**Fig. 2** zeigt ein weiteres Ausführungsbeispiel 10' eines Geräuschdämpfers 10, wie in Fig. 1 dargestellt, das im Wesentlichen dieselben strukturellen und funktionalen Merkmale, wie das in Fig. 1 gezeigte Ausführungsbeispiels eines Geräuschdämpfers 10 aufweist.

Lediglich die folgenden strukturellen Unterschiede sollen aufgezeigt werden :
So weist der Geräuschdämpfer 10'keinen inneren Gehäusetopf 18 auf und die Feder 44 ist direkt im Gehäusetopf 16' geführt. Darüber hinaus sind mehrere radiale Luftauslassöffnungen 36'vorgesehen, die in der radialen Außenwand des Gehäusetopfs 16'angeordnet sind.

**Fig. 3** zeigt ein weiteres mögliches Ausführungsbeispiel einer radial angeordneten Überdruckventileinheit 38", die beispielsweise im Bereich der Einlasskammer 26"angeordnet sein könnte. Der Aufbau der Überdruckventileinheit 38" ist vergleichbar mit der Überdruckventileinheit 38, wie in Fig. 1 gezeigt, d.h. ebenfalls mit einer Kugel 42", einer Feder 44"sowie einer Überdruckluftauslassöffnung 52".

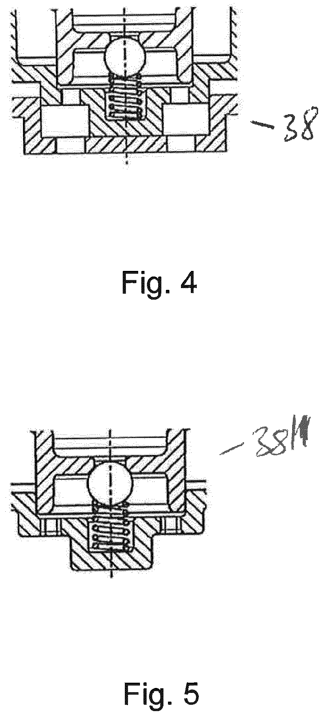

**Fig. 4** zeigt nochmals im Detail die Überdruckluftventileinheit 38 gemäß dem Ausführungsbeispiel nach Fig. 1, in der durch den inneren Gehäusetopf 18 und den Gehäusetopf 16 eine nochmalige Umlenkung des Luftstromes nach dem Durchströmen des Dämmmittels 34 erfolgt.

Wie in **Fig. 5** gezeigt, kann auch der innere Gehäusetopf 18 wegfallen, wenn eine Luftströmung homogen durch das Dämmmittel 34 erfolgen kann. Die Ausgestaltung der Überdruckventileinheit 38 ist dementsprechend einfacher ausgestaltet, wie dies aus Fig. 5 ersichtlich ist.

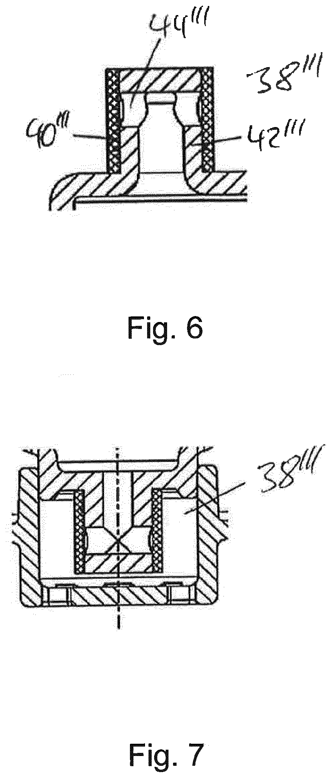

**Fig. 6** zeigt eine weitere Ausführungsform einer Überdruckventileinheit 38"'.

Die Überdruckventileinheit 38'" weist einen Gummizylinder 40'", einen Druckablassstutzen 42"' mit Druckablassöffnungen 44"' auf. Der Gummizylinder 40'"überdeckt hierbei die Druckluftablassöffnungen 44'".

Die Funktion ist dabei wie folgt:
Steigt der Druck im Schalldämpfer an, wird der Gummizylinder 40'" nach außen gedrückt und die Luft kann über die Druckablassöffnungen 44'" entweichen. Falls die Luftströmung wieder durch das Dämmmaterial 34 fließen kann und der Druck wieder sinkt, zieht sich der Gummi 40'" wieder um den Druckluftablassstutzen 42'" und verschließt somit die Druckluftablassöffnungen 44'".

Es ist denkbar, dass die Überdruckventileinheit 38'" an den Verbindungskanal 22 anschließt (siehe **Fig. 7**) oder an die Einlasskammer 26 (siehe Fig. 6).

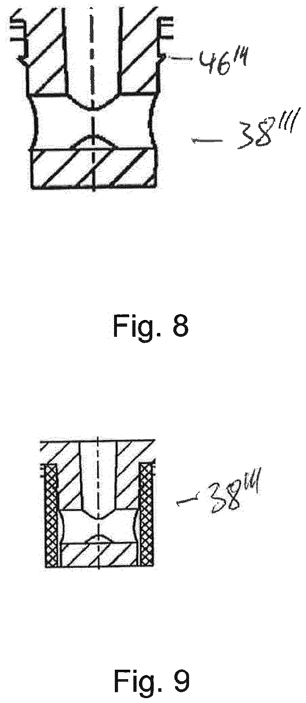

**Fig. 8** zeigt eine mögliche Befestigung des Gummizylinders 40'" mittels Haltenasen 46'". Dabei können mehrere umlaufende Haltenasen 46'" vorgesehen sein, mittels derer der Gummizylinder 40'" gehalten wird.

Wie weiter aus **Fig. 9** ersichtlich ist, kann der Druckablassstutzen 42'" sich verjüngen, um die Entlüftung zu verbessern und den Widerstand des Staudrucks genau zu bestimmen.

In der mittigen Anordnung gemäß Fig. 7 wird kein zusätzlicher Teil für die Abwanderung des Gummis benötigt, da dieser von dem gegenüberliegenden Gehäuse gehalten wird.

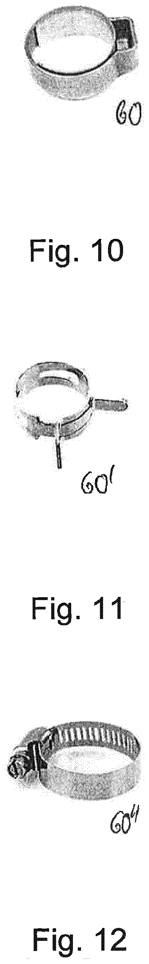

Die Befestigung des Gummizylinders 40'" kann mittels Schlauchschellen 60, 60', 60' realisiert werden, wie diese in **Fig. 10, 11 und 12** gezeigt sind. Diese können selbstklemmend (vgl. Fig. 10 und Fig. 11) oder mit einer Schraube (vgl. Fig. 12) realisiert werden. Denkbar ist auch, dass die Befestigung mittels eines Schrumpfschlauches erfolgt. Dies stellt eine Alternative oder ergänzende Befestigungsmöglichkeit des Gummizylinders 40'" dar.

### BEZUGSZEICHENLISTE

- 10: Geräuschdämpfer
- 10': Geräuschdämpfer
- 12: Gehäuse
- 14: Gehäusedeckel
- 14a: Ansatz
- 16: topfartiger Hauptgehäusekörper
- 16': Gehäusetopf
- 18: Innengehäuse
- 20: Gehäuseeinsatz
- 20a: Kragen
- 22: Verbindungskanal
- 24: Lufteinlass
- 26: Einlasskammer
- 26": Einlasskammer
- 28: Verteilerrippen
- 30: radiale Öffnungen
- 32: Ringraum
- 34: Dämmmaterial
- 36: Luftauslässe
- 36': Luftauslassöffnungen
- 38: Überdruckventileinheit
- 38": Überdruckventileinheit
- 38'": Überdruckventileinheit
- 40: Überdruckventil
- 40'": Gummizylinder
- 42: federbelastete Kugel
- 42": Kugel
- 42'": Druckablassstutzen
- 44: Schraubfeder
- 44': Feder
- 44": Feder
- 44'": Druckablassöffnung
- 46: Ventilöffnung
- 46'": Haltenasen
- 48: Federaufnahme
- 50: Luftauslassöffnungen
- 52: Überdruckluftauslassöffnungen
- 52": Überdruckluftauslassöffnung
- 60: Schlauchschellen
- 60': Schlauchschellen
- 60": Schlauchschellen

## Patentansprüche

1. Geräuschdämpfer (10) für ein Druckluftsystem eines Fahrzeugs, insbesondere Nutzfahrzeugs, mit einem Gehäuse (12), mit wenigstens einem Lufteinlass (24) und mit wenigstens einem Luftauslass (36), mit einem im Gehäuse (12) angeordneten Dämmmittel (34) und mit wenigstens einer Überdruckventileinheit (38), **dadurch gekennzeichnet, dass** die Überdruckventileinheit (38) eine zerstörungsfrei arbeitende Überdruckventileinheit (38) ist und wobei die Überdruckventileinheit (38) eine reversibel arbeitende bzw. reversibel in eine Öffnungsstellung, insbesondere zur Ableitung von Überdruck, und eine Schließstellung überführbare Überdruckventileinheit ist.

2. Geräuschdämpfer (10) nach Anspruch 1,
**dadurch gekennzeichnet, dass**
die Überdruckventileinheit (38) ein Überdruckventil (40) mit einer federbelasteten Kugel (42) aufweist.

3. Geräuschdämpfer (10) nach Anspruch 1 oder Anspruch 2,
**dadurch gekennzeichnet, dass**
die Überdruckventileinheit (38) einen Nutring umfasst.

4. Geräuschdämpfer (10) nach einem der vorhergehenden Ansprüche,
**dadurch gekennzeichnet, dass**
die Überdruckventileinheit (38) einen Gummizylinder (40) und wenigstens einen Druckablassstutzen (42) mit wenigstens einer Druckablassöffnung (44) aufweist, wobei der Gummizylinder (40) die Druckablassöffnung (44) überdeckt.

5. Geräuschdämpfer (10) nach einem der vorhergehenden Ansprüche,
**dadurch gekennzeichnet, dass**
die Überdruckventileinheit (38) mit wenigstens einer gesonderten Überdruckluftauslassöffnung (52) in Verbindung steht.

6. Geräuschdämpfer (10) nach Anspruch 5,
**dadurch gekennzeichnet, dass**
die Überdruckluftauslassöffnung (52) gegenüberliegend dem Lufteinlass (24) angeordnet ist.

7. Geräuschdämpfer (10) nach Anspruch 5 oder Anspruch 6,
**dadurch gekennzeichnet, dass**
die Überdruckluftauslassöffnung (52) und der Lufteinlass (24) an einen Verbindungskanal (22) angeschlossen sind.

8. Geräuschdämpfer (10) nach Anspruch 7,
**dadurch gekennzeichnet, dass**
der Verbindungskanal (22) im Inneren des Gehäuses (12) angeordnet ist.

9. Geräuschdämpfer (10) nach Anspruch 7 oder Anspruch 8,
**dadurch gekennzeichnet, dass**
der Lufteinlass (24) am einen Ende des Verbindungskanals (22) und die Überdruckluftauslassöffnung (52) am entgegengesetzten anderen Ende des Verbindungskanals (22) angeordnet ist.

10. Geräuschdämpfer (10) nach einem der Ansprüche 7 bis 9,
**dadurch gekennzeichnet, dass**
der Verbindungskanal (22) eine oder mehrere Öffnungen aufweist, die den Verbindungskanal (22) mit dem Bereich des Gehäuseinneren (18) verbinden, in dem das Dämmmaterial (34) angeordnet ist.

11. Geräuschdämpfer (10) nach einem der vorhergehenden Ansprüche, **dadurch gekennzeichnet, dass**
die Überdruckventileinheit (38) bezogen auf die Strömungsrichtung des durch den Verbindungskanals (22) strömenden Fluids stromaufwärts der Überdruckluftauslassöffnung (52) angeordnet ist.

## Claims

1. Sound damper (10) for a compressed-air system of a vehicle, in particular a utility vehicle, with a housing (12), with at least one air inlet (24) and with at least one air outlet (36), with a noise-insulating material (34) arranged in the housing (12) and with at least one overpressure valve unit (38), **characterised in that** the overpressure valve unit (38) is an overpressure valve unit (38) that operates non-destructively, such that the overpressure valve unit (38) operates reversibly and can be changed reversibly from an open position, in particular for discharging overpressure, and a closed position.

2. Sound damper (10) according to Claim 1,
**characterised in that**
the overpressure valve unit (38) comprises an overpressure valve (40) with a springloaded ball (42).

3. Sound damper (10) according to Claims 1 or 2,
**characterised in that**
the overpressure valve unit (38) comprises a grooved ring.

4. Sound damper (10) according to any of the preceding claims,
**characterised in that**
the overpressure valve unit (38) comprises at least one rubber cylinder (40) and at least one pressure discharge nozzle (42) with at least one pressure discharge opening (44), wherein the rubber cylinder (40) covers the pressure discharge opening (44).

5. Sound damper (10) according to any of the preceding claims,
**characterised in that**
the overpressure valve unit (38) is connected to at least one separate overpressure air outlet opening (52).

6. Sound damper (10) according to Claim 5,
**characterised in that**
the overpressure air outlet opening (52) is arranged opposite the air inlet (24).

7. Sound damper (10) according to Claims 5 or 6,
**characterised in that**
the overpressure air outlet opening (52) and the air inlet (24) are connected to a connecting duct (22).

8. Sound damper (10) according to Claim 7,
**characterised in that**
the connecting duct (22) is located inside the housing (12).

9. Sound damper (10) according to Claims 7 or 8,
**characterised in that**
the air inlet (24) is arranged at one end of the connecting duct (22) and the overpressure air outlet opening (2) is arranged at the opposite end of the connecting duct (22).

10. Sound damper (10) according to any of Claims 7 to 9,
**characterised in that**
the connecting duct (22) has one or more openings, which connect the connecting duct (22) with that part of the inside (18) of the housing in which the noise-insulating material (34) is located.

11. Sound damper (10) according to any of the preceding claims,
**characterised in that**
relative to the flow direction of the fluid flowing through the connecting duct (22), the overpressure valve unit (38) is arranged upstream from the overpressure air outlet opening (52).

## Revendications

1. Silencieux (10) pour un système d'air comprimé d'un véhicule, notamment d'un véhicule utilitaire, comprenant un boîtier (12), ayant au moins une entrée (24) d'air et au moins une sortie (36) d'air, comprenant un moyen (34) isolant disposé dans le boîtier (12) et comprenant au moins une unité (38) de soupape de surpression, **caractérisé en ce que** l'unité (38) de soupape de surpression est une unité (38) de soupape de surpression travaillant sans destruction et dans lequel l'unité (38) de soupape de surpression est une unité de soupape de surpression travaillant de manière réversible ou pouvant passer de manière réversible dans une position d'ouverture, notamment pour évacuer la surpression, et dans une position de fermeture.

2. Silencieux (10) suivant la revendication 1,
**caractérisé en ce que**
l'unité (38) de soupape de surpression a une soupape (40) de surpression ayant une bille (42) soumise à l'action d'un ressort.

3. Silencieux (10) suivant la revendication 1 ou la revendication 2,
**caractérisé en ce que**
l'unité (38) de soupape de surpression comprend un joint en U à lèvre.

4. Silencieux (10) suivant l'une des revendications précédentes,
**caractérisé en ce que**
l'unité (38) de soupape de surpression a un cylindre (40) en caoutchouc et au moins une tubulure d'évacuation de la pression ayant au moins une ouverture (44) d'évacuation de la pression, le cylindre (40) en caoutchouc recouvrant l'ouverture (44) d'évacuation de la pression.

5. Silencieux (10) suivant l'une des revendications précédentes,
**caractérisé en ce que**
l'unité (38) de soupape de surpression est en liaison avec au moins une ouverture (52) particulière de sortie de l'air comprimé.

6. Silencieux (10) suivant la revendication 5,
**caractérisé en ce que**
l'ouverture (52) de sortie de l'air comprimé est disposée à l'opposé de l'entrée (24) d'air.

7. Silencieux (10) suivant la revendication 5 ou la revendication 6,
**caractérisé en ce que**
l'ouverture (52) de sortie de l'air comprimé et l'entrée (24) d'air sont raccordées à un conduit (22) de liaison.

8. Silencieux (10) suivant la revendication 7,
**caractérisé en ce que**
le conduit (22) de liaison est disposé à l'intérieur du boîtier (12).

9. Silencieux (10) suivant la revendication 7 ou la revendication 8,
**caractérisé en ce que**
l'entrée (24) d'air est disposée à une extrémité du conduit (22) de liaison et l'ouverture (52) de sortie de l'air comprimé est disposée à l'autre extrémité opposée du conduit (22) de liaison.

10. Silencieux (10) suivant l'une des revendications 7 à 9, **caractérisé en ce que**
le conduit (22) de liaison a une ou plusieurs ouvertures, qui relient le conduit (22) de liaison à la région de l'intérieur (18) du boîtier, dans laquelle le matériau (34) isolant est disposé.

11. Silencieux (10) suivant l'une des revendications précédentes,
**caractérisé en ce que**
l'unité (38) de soupape de surpression est, rapportée au sens d'écoulement du fluide passant dans le conduit (22) de liaison, en amont de l'ouverture (52) de sortie de l'air comprimé.
